# EUROPEAN PATENT SPECIFICATION

(11) **EP 2 737 237 B1**
(45) Date of publication and mention of the grant of the patent: **09.01.2019**
(21) Application number: 12759232.7
(22) Date of filing: 25.07.2012
(51) Int. Cl.: F16K 31/40

(54) **ELECTROMAGNETICALLY-ACTUATED PILOT VALVE**
ELEKTROMAGNETISCH BETÄTIGTES PILOTVENTIL
SOUPAPE PILOTÉE ÉLECTROMAGNÉTIQUE

(30) Priority: 25.07.2011 IT MO20110179
(43) Date of publication of application: 04.06.2014
(73) Proprietor: Atlantic Fluid Tech S.r.l., 41018 San Cesario sul Panaro (MO) (IT)
(72) Inventor: STORCI, Christian, I-41121 Modena (IT); BASCIU, Diego, I-41013 Castelfranco Emilia (MO) (IT)
(74) Representative: Crugnola, Pietro
(86) International application number: PCT/IB2012/053792
(87) International publication number: WO 2013/014625

(56) References cited:
- DE-A1-102006 029 094
- GB-A- 2 161 586
- US-A- 5 072 752
- US-A1- 2007 193 638
- US-B1- 6 520 600

## Description

The invention relates to an electromagnetically actuated piloted valve, in particular a two-way and two-position solenoid valve, arranged for being traversed by pressurised fluid.

Two-way two-position electromagnetically-actuated piloted valves of known type can be comprised in a hydraulic and/or oil-pressure circuit and are driven, in use, by an electromagnet that is connected to the body of the valve.

In the body of the valve a first opening and a second opening are obtained, through which the pressurised fluid can enter and exit the valve. In general, an opening connects the valve to a pressurised portion of the circuit and is traversed by the pressurised fluid entering the valve, the other opening, on the other hand, connects the valve to a portion of the circuit that is at lower pressure, for example at atmospheric pressure, and is traversed by the fluid exiting the valve.

An example of this valve is disclosed by US Patent number 5,072,752.

US Patent No. 6,520,600 discloses a hydraulic control unit of a vehicular brake system including a housing. A bore is formed in the housing and a valve seat is received in the bore. A sleeve is mounted on the valve seat and the sleeve includes an annular groove for receiving material from the housing to retain the sleeve on the housing. An armature core is slidably received in the sleeve.

The electromagnet comprises a coil that encloses a fixed core and a movable core, both of which are made of a ferromagnetic material. One of the opposite ends of the movable core faces the fixed core. The movable core comprises a plurality of components that are reciprocally movable along the same longitudinal direction.

When the electromagnet is excited, a magnetic field is generated that originates an electromagnetic force that enables the movable core to move towards the fixed core. Some embodiments of these electromagnetically-actuated piloted valves of known type comprise a ring of amagnetic material welded to the fixed core. This ring, which is arranged near the zone in which the movable core faces the fixed core, increases the electromagnetic force that moves the movable core towards the fixed core. In fact, as the ring is made of an amagnetic material, the flow lines close at the movable core and the fixed core. The presence of the ring, and thus of the welding by means of which the ring is joined to the fixed core, significantly weakens the structure of the valve, which thus has the drawback of not being able to support high stresses and strains.

When the electromagnet is deactivated, the electromagnetic force ceases that thus no longer maintains the movable core near the fixed core; the movable core thus tends to move away from the fixed core, for example owing to the action of elastic means.

Piloted valves of known type further comprise a plug and a main piston. The plug is connected to one of the components of the movable core and, in use, is moved with respect to the movable core by a spring. The main piston is movable longitudinally inside the body of the valve. The plug can alternatively adopt a first position, in which it plugs a hole that extends longitudinally into the main piston, and a second position in which the plug does not plug the hole because it is maintained spaced apart from the latter. When the plug is in the first position, the passage of the pressurised fluid inside the valve is prevented and thus the first opening and the second opening are not in reciprocal communication. On the other hand, when the plug is in the second position, the pressurised fluid traverses the valve and the first opening and second opening are reciprocally connected.

The plug is moved between the first and the second position in two subsequent steps. In a first step the electromagnet is driven and the movable core moves towards the fixed core, whilst the plug maintains the hole closed.

In the second step, the spring moves the plug with respect to the movable core in such a manner that the plug moves away from the main piston and the hole is consequently opened.

It is thus clear that the operation disclosed above is based on the presence of a plurality of reciprocally movable components, this constituting a clear drawback of these known valves. In fact, the various components are intended for interacting reciprocally with great precision and as these valves have substantially reduced dimensions, the dimensional tolerances of the various components are very limited and the manufacture of the components is thus complex and costly.

Another drawback of these valves is that, as a high number of components is present, the procedure for assembling and adjusting the valves is significantly long and thus costly.

A further drawback of these valves is that the operating fluid flowrate that can traverse the valves is proportionate to the radial dimensions of the main piston, and consequently to the dimensions of the cavity that receives the main piston. Therefore, valves of known type can enable high flowrates only if they have significant dimensions. This is a clear drawback inasmuch as they not only occupy much space on the machine on which they have to be mounted but are also very heavy.

One object of the invention is to improve piloted valves of known type.

Another object is to provide a valve, in particular a two-position and two-way electromagnetically-actuated valve, that is able to support high pressures of the operating fluid and is at the same time inexpensive to manufacture and is adjustable in a substantially simple manner.

A further object is to provide a valve that can operate with very high operating fluid flowrates but with reduced overall dimensions and weight.

According to the invention, a valve as defined in claim 1 is provided.

The invention can be better understood and implemented with reference to the attached drawings that illustrate embodiments thereof by way of non-limiting example, in which:
Figure 1 is a longitudinal section of a piloted valve according to the invention, shown in a first operating configuration;
Figure 2 shows the valve of Figure 1 in a second operating configuration;
Figure 3 is a longitudinal section of an embodiment of the piloted valve according to the invention, shown in a first operating configuration;
Figure 4 shows the valve of Figure 3 in a second operating configuration;
Figure 5 is a longitudinal section of another embodiment of the piloted valve according to the invention.

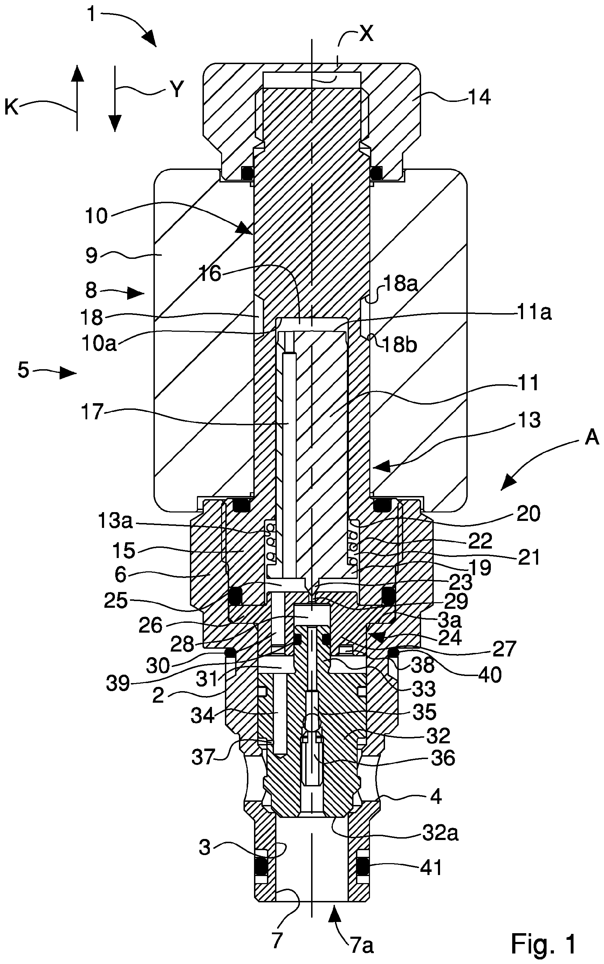

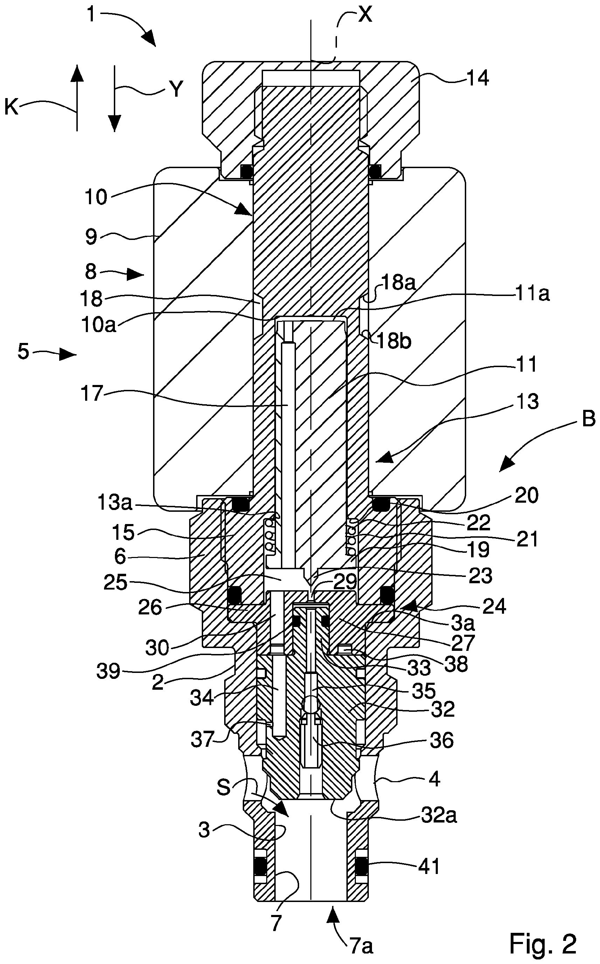

Figures 1 and 2 show an electromagnetically-actuated piloted valve 1 in a first operating configuration A (Figure 1) and in a second operating configuration B (Figure 2).

The valve 1 is provided with a housing 2 in which a main cavity 3 and a second cavity 4 are made by means of which a pressurised operating fluid, for example oil, can enter or exit the housing 2. In practice, the housing 2 constitutes the body of the valve 1.

The housing 2 is in turn intended for being received in a suitable element, a so-called "manifold" (not shown), having a complementary shape to the housing 2.

Outside the housing 2 a plurality of seats is made that are arranged for receiving the same number of sealing elements 40, 41, that are suitable for preventing the fluid from passing between the housing 2 and the aforesaid manifold.

The main cavity 3 extends longitudinally through the housing 2 substantially parallel to a longitudinal axis X of the valve 1. The second cavity 4 extends transversely (in particular orthogonally) to the main cavity 3 in such a manner as to intersect the latter.

The valve 1 comprises driving means 5 that is connected to the housing 2 at a first end 6 of the main cavity 3. The main cavity further comprises a second end 7, which is opposite the first end 6 and defines an opening 7a through which the operating fluid can enter the housing 2, or exit the latter. For example, the operating fluid can exit the housing 2 through the opening 7a of the main cavity 3 and enter the housing 2 through the second cavity 4, or vice versa.

The driving means 5 comprises an electromagnet 8, comprising in turn a coil 9 that encloses a fixed core 10 and a movable core 11, both made of a suitable ferromagnetic material of known type.

The fixed core 10, which is approximately cylinder-shaped, projects outside the coil 9 (on the side opposite the housing 2) and is enclosed by a threaded cover 14 screwed to a threaded terminal end thereof. The movable core 11 is contained inside a tubular element 13, or sleeve, made of a ferromagnetic material in a single body with the fixed core 10. At an end portion 15 of the tubular element 13, the latter is connected to the housing 2. The end portion 15 is threaded and received inside the first end 6 of the main cavity 3, on the first end 6 a corresponding thread being made. Therefore, the end portion 15 is contained in the main cavity 3 and screwed to the first end 6 of the main cavity 3.

The tubular element 13 defines internally an internal cavity 13a in which the movable core 11 is received. The movable core 11 comprises a bottom wall 11a facing a wall 10a of the fixed core 10. In the first operating configuration A, between the bottom wall 11a and the wall 10a a first chamber 16 is defined that is arranged for being filled by the operating fluid. It should be noted that in the movable core 11 a conduit 17 is made connecting the first chamber 16 with the main cavity 3 so as to permit the passage of the operating fluid. The conduit 17 extends parallel to the longitudinal axis X over the entire extent of the movable core 11 and leads into the bottom wall 11a.

On an external side surface of the fixed core 10 an annular groove 18 is obtained, which is substantially interposed between the fixed core 10 and the tubular element 13. The annular groove 18 is positioned near the zone in which the bottom wall 11a and the wall 10a are placed, and defines a magnetic gap of preset dimensions that separates, in a radial direction, the coil 9 from the ferromagnetic fixed core 10. The annular groove 18 is provided with sides 18a and 18b that can be tilted in such a manner that the depth of the annular groove 18 gradually decreases to the ends thereof. For example, the sides 18a and 18b can have a tilt comprised between 30° and 60°, in particular substantially equal to 45°. The annular groove 18 performs the same function as the amagnetic ring found in some known valves. Nevertheless, unlike the amagnetic ring, the annular groove 18 enables the valve not to be weakened structurally, because it avoids the need to provide welding between external elements (the amagnetic ring) and the fixed core of the electromagnet. In this manner, the valve according to the invention is able to support great stress and strain.

At the end of the movable core 11 that is received inside the main cavity 3, the movable core 11 comprises an annular portion 19 having a radial extent (diameter) that is greater than the radial extent (diameter) of the remaining portion of movable core 11 and slightly less than the radial extent (diameter) of the internal cavity 13a.

The annular portion 19, together with the side walls of the internal cavity 13a and an internal abutting wall 20 of the end portion 15, bounds an annular chamber 21 in which elastic means 22 is housed, for example a coil spring. The coil spring contacts, on one side, the annular portion 19 and on the other side the internal abutting wall 20, extending annularly around the movable core 11 in such a manner as to be coaxial with the movable core 11.

From a substantially central portion of the annular portion 19 in a direction opposite the annular chamber 21, plugging means 23 projects that is approximately shaped as a cylindrical-conical pin and is a single body with the movable core 11.

The plugging means 23 projects towards an abutting element 24, which is approximately cylinder-shaped, and is positioned in a second chamber 25, interposed between the annular portion 19 and the abutting element 24 and arranged for being filled, in use, by the operating fluid.

The abutting element 24 comprises a main portion 27 that is substantially cylinder-shaped, from which an annular edge 26 projects. The annular edge 26 extends radially from the main portion 27 to the outside and is interposed, and is maintained blocked, between the end portion 15 and a shoulder 3a comprised in the internal wall of the main cavity 3. Owing to the fact that the annular edge 26 is maintained blocked, the abutting element 24 is fixed in the position shown in Figures 1-5.

In one zone of the main portion 27 opposite the second chamber 25 a recess 28 is obtained, that is, for example, cylinder-shaped, that extends parallel to the longitudinal axis X.

On the abutting element 24 a through hole 29 is made that connects the second chamber 25 to the recess 28 and enables the operating fluid to pass. The hole 29 is made in a position that is such as to be able to be selectively engaged or disengaged and consequently closed or opened by the plugging means 23. The hole 29 and the plugging means 23 are both coaxial to the abutting element 24 and to the movable core 11.

In other embodiments that are not shown, the hole 29 and the plugging means 23 can be not coaxial with the abutting element 24 and the movable core 11.

In the abutting element 24 a further conduit 30 is also made that connects the second chamber 25 to a third chamber 31 and is arranged for being traversed by the operating fluid. The further conduit 30 extends parallel to the longitudinal axis X and completely traverses the abutting element 24. On the wall of the abutting element 24 facing the third chamber 31 an annular groove 38 is made into which the further conduit 30 can lead.

The third chamber 31 is interposed between the abutting element 24 and a main piston 32.

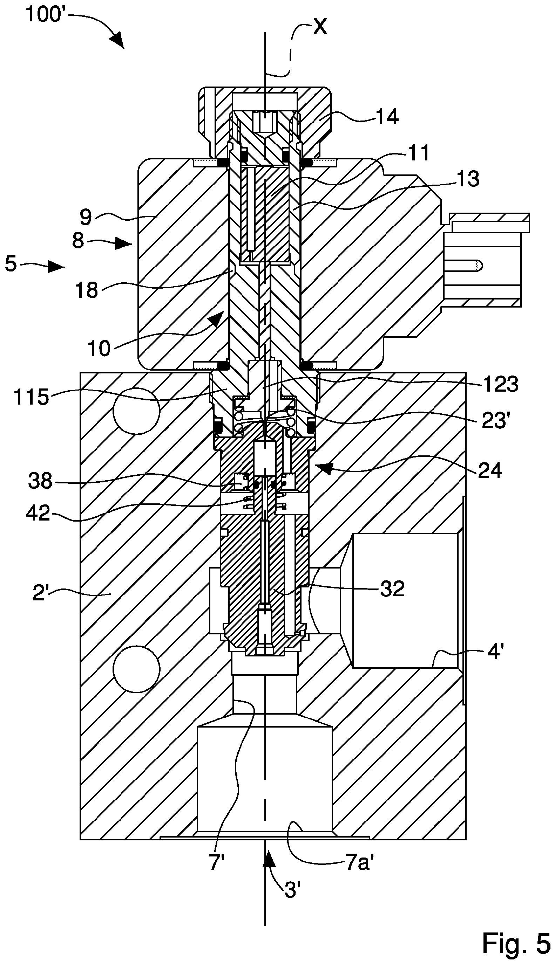

In the embodiment of the invention shown in Figure 5, inside the annular groove 38 further elastic means 42 can be received, at least partially, that is arranged for cooperating with the pressurised operating fluid (inside the chamber 31) to maintain (when necessary) the main piston 32 in a lowered position.

This is particularly useful when the flowrates that traverse the valve are extremely low, for example equal to 2 litres/minute.

The further elastic means 42 can also be provided in the embodiments of the valve 1, 100 disclosed with reference to Figures 1-4.

From an end of the main piston 32, a pivot 33 projects towards the abutting element 24. The pivot 33 is coaxial with the main piston 32 and is made in a shapingly coupled manner with the recess 28. In use, the pivot 33 is thus intended for being received inside the recess 28.

On an external side wall of the pivot 33 a seat is made in which a washer 39 is received that enables the recess 28 and third chamber 31 to be sealingly separated.

In one embodiment of the invention that is not shown, the pivot 33 can be devoid of the seat and of the washer 39.

In the main piston 32 a first conduit 34 is made that connects the third chamber 31 to the second cavity 4. Near the second cavity 4 the first conduit 34 leads into an end conduit 37 having a significantly smaller diameter than the diameter of the first conduit 34. The first conduit 34 is substantially aligned on the further conduit 30.

The end conduit 37 has a cross section, i.e. a passage area for the fluid, which is significantly less than the cross section of the hole 29, for example equal to one third of the latter. This is important for the correct operation of the valve, as will be explained in detail below.

In the main piston 32 a second conduit 35 is also made that connects the recess 28 to the second end 7 of the main cavity 3. Inside the second conduit 35 a non-return valve 36, of known type, is fitted that prevents the operating fluid from flowing in the direction of the recess 28. The second conduit 35 is substantially coaxial with the longitudinal axis X.

The first conduit 34, the second conduit 35 and the end conduit 37 are made inside the main piston 32. The aforesaid conduits - together with the further conduit 30 and the hole 29 of the abutting element 24 - ensure correct operation of the valve. Thus the valve 1 does not require other conduits, either in the housing 2, or in other components of the valve. This substantially simplifies the internal structure of the valve and enables high manufacturing and assembling costs to be avoided.

In one embodiment of the invention that is not shown, the valve 1 devoid of the non-return valve 36.

The valve 1 is provided with a plurality of suitably positioned known sealing elements arranged for preventing losses or leaks of operating fluid from the body of the valve to the exterior.

It should be noted that the valve 1 disclosed above is a valve of normally closed type, which means that when it is in the first operating configuration A - i.e. in the configuration in which the driving means 5 is not active - the plugging means 23 maintains the hole 29 closed, thus preventing the passage of the operating fluid from the second chamber 25 to the recess 28. This is possible owing to the presence of the spring 22, which pushes the movable core 11 in a direction indicated by the arrow Y, such that the plugging means 23 engages the hole 29, maintaining the latter closed.

When the valve 1 is in the first operating configuration A, an end 32a of the main piston 32, opposite the pivot 33, is positioned in contact with the internal side walls of the main cavity 3 in such a manner as to maintain the second cavity 4 and the second end 7 of the main cavity 3 reciprocally separate (Figure 1).

The (pressurised) operating fluid enters the housing 2 of the valve 1 through the second cavity 4 and, after traversing the end conduit 37, in succession flows into the first conduit 34, fills the third chamber 31, traverses the further conduit 30, fills the second chamber 25, traverses the conduit 17 and finally fills the first chamber 16. As in the first operating configuration A, the pressurised operating fluid fills the third chamber 31, this enables the piston 32 to be maintained in the lowered position shown in Figure 1 and disclosed above (in which the end 32a is positioned in contact with the internal side walls of the main cavity 3). This is substantially due to the great pressure difference between the pressure of the operating fluid in the third chamber 31 and the pressure of the operating fluid inside the main cavity 3 near the second end 7 thereof.

When it is desired to enable fluid to flow to the outside of the valve 1 - i.e. to the second end 7 of the main cavity 3 - the driving means 5 is driven in such a manner that the valve 1 is taken to the second operating configuration B (Figure 2). The electromagnet 8 is activated, the coil 9 is excited and a magnetic field is generated that gives rise to an electromagnetic force that is able to overcome the elastic force of the spring 22. The magnetic gap defined by the annular groove 18 causes the flow lines of the magnetic field to close at the walls 10a and 11a, so as to generate the electromagnetic force that moves the movable core 11 towards the fixed core 10 according to a direction indicated by the arrow K in the figures. The movable core 11 therefore moves to the fixed core 10 until the bottom wall 11a arrives near the wall 10a. The operating fluid that previously filled the first chamber 16 can leave the first chamber 16 by means of the conduit 17, thus reaching the second chamber 25.

When the movable core 11 moves to the fixed core 10 the plugging means 23 disengages and therefore opens, the hole 29. In this manner the operating fluid in the second chamber 25 enters the second conduit 35 via the hole 29 and flows in the second conduit 35 to the outlet of the valve 1, i.e. to the second end 7 of the main cavity 3. The fluid that flows into the second conduit 35 comes from both the first chamber 16 (via the conduit 17), and from the second cavity 4. Similarly to what has been disclosed above, the pressurised fluid can pass from the second cavity 4 to the second conduit 35, traversing in sequence the end conduit 37, the first conduit 34, the further conduit 30 and the second chamber 25.

When the pressurised fluid flows into the second conduit 35 the main piston 32 is moved in an opposite direction to the flowing direction of the fluid. Therefore, as the operating fluid flows from the hole 29 to the second end 7, the main piston 32 is no longer maintained in the lowered position shown in Figure 1 but moves in the direction K until it comes into contact with the abutting element 24, in such a manner that the pivot 33 is received almost completely inside the recess 28. In the second operating configuration B the third chamber 31, emptied of the operating fluid that it received previously, is no longer defined between the abutting element 24 and the main piston 32 and the further conduit 30 constitutes the prolongation of the first conduit 34. Further, in the second operating configuration B the end 32a of the main piston 32 is spaced away from the internal side walls of the main cavity 3 in such a manner as to enable the second cavity 4 and the second end 7 of the main cavity 3 to be reciprocally connected, as shown by the arrow S in Figure 2.

Whilst the operating fluid flows from the hole 29 to the second end 7, a further volume of the operating fluid enters the valve 1 through the second cavity 4 and reaches the third chamber 25 after traversing the end conduit 37 and the conduits 30, 34. From the third chamber 25, also this further volume of the operating fluid traverses the hole 29, flows in the second conduit 35 and reaches the second end 7, i.e. the outlet of the valve 1. Although the flow of the further volume of the operating fluid entering the valve tends to oppose the movement of the main piston 32 along the direction K, nevertheless, owing to the fact that the end conduit 37 has a passage area for the fluid that is significantly less than the cross section of the hole 29, the flowrate of fluid entering the valve 1 is significantly less than the flowrate of fluid exiting the valve. For this reason, the main piston 32 is able to move in the direction K in such a manner as to place in communication the main cavity 3 and the second cavity 4.

In use, when the solenoid valve 8 is deactivated (and electromagnetic force consequently ceases) the spring 22 moves the movable core 11 in the direction Y, so as to return the valve 1 to the first operating configuration A (Figure 1). The movable core 11 is thus moved away from the fixed core 10 and the plugging means 23 maintains the hole 29 closed, preventing the operating fluid from passing from the second chamber 25 to the recess 28. Consequently, the main piston 32 moves in the direction Y, again preventing the operating fluid from passing between the second cavity 4 and the second end 7 of the main cavity 3, that are thus not connected together.

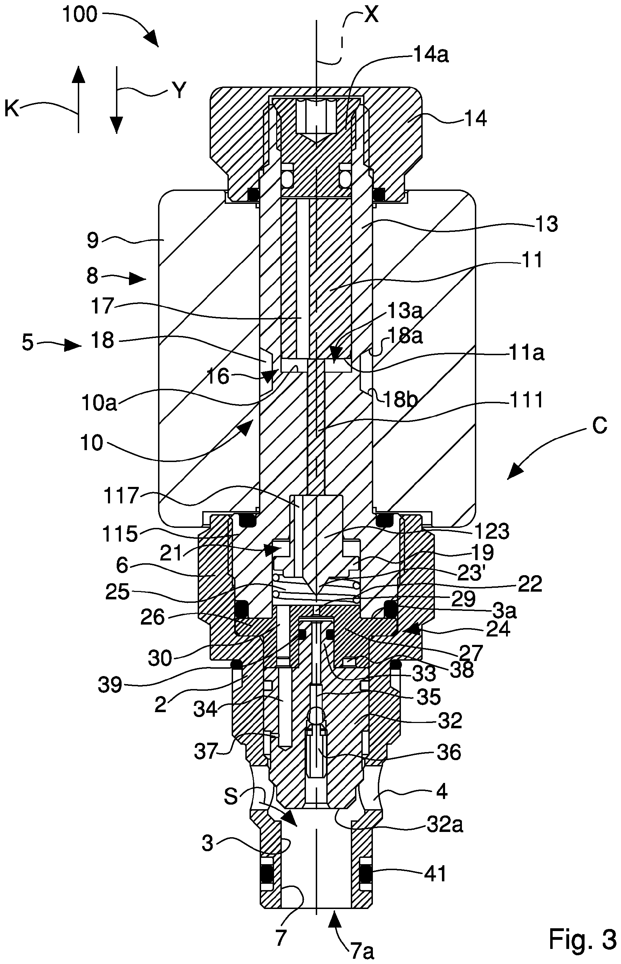

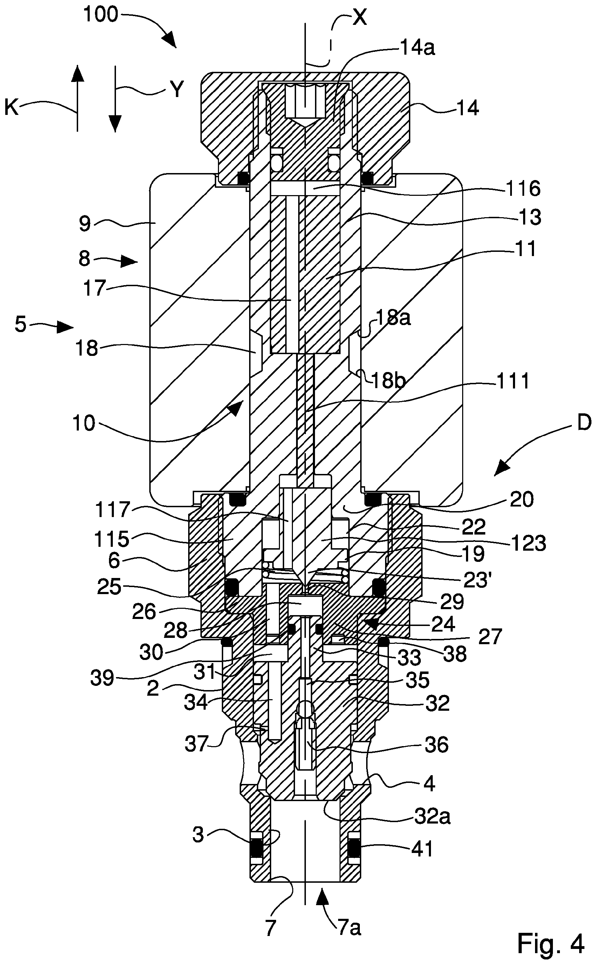

Figures 3 and 4 show an embodiment of the valve - indicated by the number 100 - according to the invention, respectively in a first operating configuration C (Figure 3) and in a second operating configuration D (Figure 4). The components of the valves 100, which are analogous to corresponding components of the previously disclosed valve 1, are indicated by the same reference numbers.

The valve 100 is a valve of the normally open type, which means that when it is in the first operating configuration C - i.e. in the configuration in which the driving means 5 is not active - the plugging means 23' does not close the hole 29, thus enabling the operating fluid to flow from the second chamber 25 to the opening 7a.

In the valve 100, the movable core 11 is received in an internal cavity 13a of the tubular element 13. The internal cavity 13a faces the threaded cover 14 whilst the fixed core 10 faces the housing 2 of the valve 1 and is connected to the latter via the end portion 115 thereof. A plugging element 123 is connected to the movable core 11 via a connecting element 111 that extends substantially parallel to the axis X between the movable core 11 and the plugging element 123. The connecting element 111 is received in a through hole, that is made in the fixed core 10 and connects the internal cavity 13a to the annular chamber 21. The plugging element 123 is provided with plugging means 23', which projects from a side of the plugging element 123 opposite the annular chamber 21 and is shaped approximately as a conical pin and made as a single body with the plugging element 123. The plugging means 23' projects towards the abutting element 24 and is positioned in the second chamber 25. In the plugging element 123 a conduit 117 is further made that is arranged for being traversed by the operating fluid.

In the second chamber 25 the elastic means 22 (for example a coil spring) is housed, that pushes the plugging element 123 in the direction K, so that the plugging means 23' disengages the hole 29, which is consequently opened.

In the first operating configuration C of the valve 100, the operating fluid in the second chamber 25 traverses the second conduit 35 to the second end 7 of the main cavity 3. The fluid that flows in the second conduit 35 passes from the second cavity 4 to the second conduit 35, traversing in sequence the end conduit 37, the first conduit 34, the further conduit 30 and the second chamber 25.

When the pressurised fluid flows in the second conduit 35 the main piston 32 is moved in an opposite direction to the flowing direction of the fluid. Therefore, as the operating fluid flows from the hole 29 to the second end 7, the main piston 32 is moved along the direction K until it comes into contact with the abutting element 24, in such a manner that the pivot 33 is received almost completely inside the recess 28. In the first operating configuration C the third chamber 31 is no longer defined between the abutting element 24 and the main piston 32 and the further conduit 30 constitutes the prolongation of the first conduit 34. Further, in the first operating configuration C the end 32a of the main piston 32 is spaced away from the internal side walls of the main cavity 3 in such a manner as to enable the second cavity 4 and the second end 7 of the main cavity 3 to be connected together, as shown by the arrow S in Figure 3. When it is desired to prevent the passage of the fluid to the outlet of the valve 1 - i.e. to the second end 7 of the main cavity 3 - the driving means 5 is driven in such a manner that the valve 1 is taken to the second operating configuration D (Figure 4). The electromagnet 8 is activated, the coil 9 is excited and a magnetic field is generated that gives rise to an electromagnetic force that is able to overcome the elastic force of the spring 22. The magnetic gap defined by the annular groove 18 causes the flow lines of the magnetic field to close at the walls 10a and 11a, such as to generate the electromagnetic force that moves the movable core 11 towards the fixed core 10 along the direction Y. The movable core 11 therefore moves towards the fixed core 10 until the bottom wall 11a comes near the wall 10a. When the movable core 11 moves to the fixed core 10 the plugging means 23 engages, and thus closes, the hole 29. Consequently, the main piston 32 moves in the direction Y, preventing the operating fluid from passing between the second cavity 4 and the second end 7 of the main cavity 3, which are thus not connected together.

The operating fluid that previously filled the first chamber 16 can leave the first chamber 16 by means of the conduit 17, thus reaching a further chamber 116 (Figure 4). The further chamber 116 is defined at the end of the internal cavity 13a and is interposed between the movable core 11 and a plug 14a, which closes the tubular element 13 near the threaded cover 14.

Figure 5 shows another embodiment of a valve 100' - of the normally open type - according to the invention. The components of the valve 100' that are analogous to corresponding components of the previously disclosed valves 100 are indicated by the same reference numbers.

Unlike the embodiments disclosed previously, the valve 100' is provided with a housing 2' that corresponds functionally and structurally to the manifold of the aforesaid embodiments. In practice, the valve 100' - unlike the valves 1, 100 - is a valve devoid of a body. The latter is in fact replaced by the housing 2', which surrounds and encloses all the internal elements of the valve, i.e. the main piston 32, the abutting element 24 and the end portion 115 of the fixed core 10.

Therefore, the main piston 32, the abutting element 24 and the end portion 115 of the fixed core 10 are received in a main cavity 3' made in the housing 2'. Analogously to what has been disclosed previously with reference to the valves 1, 100, also the valve 100' can adopt two configurations alternatively. In a first operating configuration (shown in Figure 5), the main piston 32 contacts the walls of the main cavity 3' in an end zone 7' (where an opening 7a' is defined) of the latter, in such a manner as to prevent a connection between the main cavity 3' and a second cavity 4'. In a second operating configuration, the aforesaid connection is permitted and the fluid can traverse the valve 100' .

The valve 100' according to the invention is extremely simple and compact (inasmuch as it comprises a highly limited number of elements), that is inexpensive to make and simple to assemble. Further, owing to the absence of the housing 2, the valve 100' has significantly reduced dimensions.

In one embodiment that is not shown, the valve 100' can be of the normally closed type.

Owing to the invention, a valve 1, 100, 100' is supplied that is able to bear high pressures of the operating fluid and at the same time is inexpensive to manufacture and is adjustable in a substantially simple manner. On the basis of what has been disclosed so far it is evident that the operation of the valve 1, 100, 100' is not based on the presence of a plurality of reciprocally movable components, as occurs in known valves.

In fact, the plugging means 23, 23' and the main piston 32 both interact with the abutting element 24, which is fixed. Further, the plugging means 23, 23' is made as a single body with the movable core 11, or (in the case of the normally open valve 100, 100') with the plugging element 123, unlike the plug of known valves, which is connected to one of the components of the movable core and, in use, has to be moved with respect to the movable core.

This all makes the assembling of the valves 1, 100, 100' according to the invention much simpler and faster than assembling of valves of known type.

Another advantage of the invention is to provide a valve 1, 100, 100' that enables high flowrates of fluid to pass through although the valve is more compact and lighter in weight than known valves. In fact, provided the reciprocal arrangement of the elements is as disclosed above and shown in the attached figures, the dimensions of the movable core 11 and of the main piston 32 can vary.

For example, both the movable core 11 and the main piston 32 can have a shorter longitudinal extent (than the longitudinal extent shown in the Figures) such that, when the valve is in the second operating configuration B, the main piston 32 almost completely frees the second cavity 4 (or 4') so as to generate a wide area through which the operating fluid can pass from the second cavity 4 (or 4') to the second end 7 (or 7') of the main cavity 3 (or 3').

## Claims

1. Electromagnetically-actuated piloted valve (1; 100; 100') comprising:
- a housing (2; 2') provided with a plurality of cavities (3, 4; 3', 4') through which a pressurised operating fluid can enter, or exit, said valve (1; 100);
- driving means (5, 8, 22) comprising an electromagnet (8);
- plugging means (23; 23') that is longitudinally movable along two opposite parallel directions (K, Y) and driven by said driving means (5, 8, 22) ;
- an abutting element (24), provided with at least one through hole (29) arranged for being selectively engaged, or disengaged, by said plugging means (23; 23') such as to alternatively enable said operating fluid to traverse, or preventing said operating fluid from traversing, said at least one hole (29) and consequently alternatively enable, or prevent, the passage of said operating fluid through said valve (1; 100; 100');
- a main piston (32);
wherein:
- said electromagnet (8) comprises a coil (9) that encloses a fixed core (10) and a movable core (11), which are both made of a ferromagnetic material;
- said plugging means (23; 23') projects to said abutting element (24) and is positioned in a second chamber (25), defined between said movable core (11) and said abutting element (24) and arranged for being filled, in use, by said operating fluid;
- said abutting element (24) comprises a peripheral zone (26) having a circular shape, which externally surrounds a main portion (27) and extends radially from said main portion (27) to the exterior, said peripheral zone (26) being interposed between an end portion (15; 115) of said fixed core (10) and a shoulder (3a) defined by an internal wall of a main cavity (3; 3') comprised in said plurality of cavity (3, 4; 3', 4');
- said main portion (27) comprises a recess (28) that extends parallel to a longitudinal axis (X) of said valve (1) and faces a part opposite said second chamber (25);
**characterized in that**:
- said main piston (32) is provided with a pivot (33) that projects from an end of said main piston (32) to said abutting element (24) so as to be received, in use, inside said recess (28);
- in said abutting element (24) a further conduit (30) is made that connects said second chamber (25) to a third chamber (31) and is arranged for being traversed by said operating fluid, said third chamber (31) being interposed between said abutting element (24) and said main piston (32) .

2. Valve according to claim 1, wherein said abutting element (24) is fixed.

3. Valve according to claim 1 or 2, wherein said plugging means (23) is pin-shaped and made in a single body with said movable core (11).

4. Valve according to claim 1 or 2, wherein a plugging element (123) is connected to said movable core (11) through a connecting element (111), said plugging element (123) being provided with plugging means (23') that is tapered and made in a single body with said plugging element (123).

5. Valve according to any preceding claim, wherein said further conduit (30) extends parallel to said longitudinal axis (X) for the entire thickness of said abutting element (24).

6. Valve according to any one of claims 1 to 5, wherein said driving means (5, 8, 22) comprises a spring (22) arranged for maintaining said movable core (11) in a lowered position or in a raised position when said driving means (5) is not active, so as to maintain said plugging means (23; 23') engaged with, or disengaged from, said hole (29).

7. Valve according to any preceding claim, wherein said housing (2) constitutes the body of said valve (1, 100) .

8. Valve according to any one of claims 1 to 6, wherein said housing (2') is made in the shape of a manifold, arranged for surrounding and enclosing said main piston (32), said abutting element (24) and said end portion (115) of said fixed core (10).

## Patentansprüche

1. Elektromagnetisch-betätigtes gesteuertes Ventil (1; 100; 100') aufweisend:
- ein Gehäuse (2; 2'), welches mit einer Vielzahl von Hohlräumen (3, 4; 3', 4') versehen ist, durch welche eine unter Druck stehende Betriebsflüssigkeit in das Ventil eindringen oder aus dem Ventil (1; 100) austreten kann;
- Antriebsmittel (5, 8, 22) aufweisend einen Elektromagneten (8);
- Steckmittel (23; 23'), welches entlang zweier entgegengesetzter paralleler Richtungen (K, Y) longitudinal bewegbar ist und durch das Antriebsmittel (5, 8, 22) angetrieben wird;
- ein aneinandergrenzendes Element (24), welches mit wenigstens einem Durchgangsloch (29) versehen ist, welches dazu eingerichtet ist, durch das Steckmittel (23; 23') in der Weise selektiv in Eingriff gebracht oder gelöst zu werden, um wahlweise das Durchfließen der Betriebsflüssigkeit durch das wenigstens eine Loch (29) zu ermöglichen oder zu verhindern und entsprechend wahlweise den Durchfluss der Betriebsflüssigkeit durch das Ventil (1; 100; 100') zu ermöglichen oder zu verhindern;
- einen Hauptkolben (32);
wobei:
- der Elektromagnet (8) eine Spule (9) aufweist, welche einen festen Kern (10) und einen bewegbaren Kern (11) umfasst, welche beide aus einem ferromagnetischem Material bestehen;
- das Steckmittel (23; 23') zu dem aneinandergrenzenden Element (24) zeigt und in einer zweiten Kammer (25) angeordnet ist, welche zwischen dem bewegbaren Kern (11) und dem aneinandergrenzenden Element (24) definiert und dazu eingerichtet ist, beim Gebrauch mit der Betriebsflüssigkeit befüllt zu sein;
- das aneinandergrenzende Element (24) einen peripheren Bereich (26) mit einer runden Form aufweist, welche einen Hauptteil (27) von außen umgibt und sich radial von dem Hauptteil (27) zu der Außenseite erstreckt, wobei der periphere Bereich (26) zwischen einem Endteil (15; 115) des festen Kerns (10) und einer Schulter (3a), welche durch eine innere Wand von einem in der Vielzahl an Hohlräumen (3, 4; 3', 4') enthaltenen Haupthohlraum (3; 3') definiert ist, eingeschoben ist;
- der Hauptteil (27) eine Ausnehmung (28) aufweist, welche sich parallel zu einer longitudinalen Achse (X) des Ventils (1) erstreckt und einem der zweiten Kammer (25) gegenüberliegendem Teil gegenüberliegt;
**dadurch gekennzeichnet, dass**:
- der Hauptkolben (32) mit einem Angelpunkt bereitgestellt ist, welcher sich von einem Ende des Hauptkolbens (32) zu dem aneinandergrenzenden Element (24) erstreckt, sodass dieser im Gebrauch innerhalb der Ausnehmung (28) aufgenommen ist;
- in diesem aneinandergrenzenden Element (24) ein weiterer Kanal (30) eingepasst ist, welcher die zweite Kammer (25) mit einer dritten Kammer (31) verbindet und dazu eingerichtet ist, von der Betriebsflüssigkeit durchströmt zu werden, wobei die dritte Kammer (31) zwischen dem aneinandergrenzenden Element (24) und dem Hauptkolben (32) eingeschoben ist.

2. Ventil nach Anspruch 1, wobei das aneinandergrenzende Element (24) fixiert ist.

3. Ventil nach Anspruch 1 oder 2, wobei das Steckmittel (23) stiftförmig ist und aus einem einzigen Körper mit dem beweglichen Kern (11) gefertigt ist.

4. Ventil nach Anspruch 1 oder 2, wobei ein Steckelement (123) mit dem bewegbaren Kern (11) durch ein Verbindungselement (111) verbunden ist, wobei das Verbindungselement (123) mit einem Steckmittel (23') vorgesehen ist, welches konisch ist und aus einem einzigen Körper mit dem Verbindungselement (123) gefertigt ist.

5. Ventil nach einem der vorhergehenden Ansprüche, wobei sich der weitere Kanal (30) parallel zu der longitudinalen Achse (X) über die gesamte Dicke des aneinandergrenzenden Elements (24) erstreckt.

6. Ventil nach einem der Ansprüche 1 bis 5, wobei das Antriebsmittel (5, 8, 22) eine Feder (22) aufweist, welche dazu eingerichtet ist, den bewegbaren Kern (11) in eine untere Position oder in eine erhöhte Position zu führen, wenn das Antriebsmittel (5) nicht aktiv ist, sodass das Steckmittel (23, 23') mit dem Loch (29) verbunden oder gelöst ist.

7. Ventil nach einem der vorhergehenden Ansprüche, wobei das Gehäuse (2) den Körper des Ventils (1, 100) bildet.

8. Ventil nach einem der Ansprüche 1 bis 6, wobei das Gehäuse (2') in der Form eines Sammelrohrs ausgebildet ist, welches dazu eingerichtet ist, den Hauptkolben (32), das aneinandergrenzende Element (24) und das Endteil (115) des festen Kerns (10) zu umgeben und zu umschließen.

## Revendications

1. Vanne pilotée actionnée électromagnétiquement (1 ; 100 ; 100') comprenant :
- un boîtier (2 ; 2') pourvu d'une pluralité de cavités (3, 4 ; 3', 4') à travers lesquelles un fluide de fonctionnement mis sous pression peut entrer dans ladite vanne (1 ; 100) ou s'échapper de celle-ci ;
- des moyens d'entraînement (5, 8, 22) comprenant un électroaimant (8) ;
- des moyens d'obturation (23 ; 23') qui sont mobiles longitudinalement le long de deux directions parallèles opposées (K, Y) et entraînés par lesdits moyens d'entraînement (5, 8, 22) ;
- un élément de butée (24), pourvu d'au moins un trou traversant (29) agencé pour pouvoir sélectivement entrer en prise avec ou sortir de prise desdits moyens d'obturation (23 ; 23') de telle manière à permettre alternativement audit fluide de fonctionnement de traverser, ou d'empêcher ledit fluide de fonctionnement de traverser, ledit au moins un trou (29) et par conséquent permettre alternativement, ou empêcher, le passage dudit fluide de fonctionnement à travers ladite vanne (1 ; 100 ; 100') ;
- un piston principal (32) ;
dans laquelle
- ledit électroaimant (8) comprend une bobine (9) qui enferme un noyau fixe (10) et un noyau mobile (11), qui sont tous deux faits d'un matériau ferromagnétique ;
- lesdits moyens d'obturation (23 ; 23') font saillie jusqu'audit élément de butée (24) et sont positionnés dans une deuxième chambre (25), définie entre ledit noyau mobile (11) et ledit élément de butée (24) et agencée pour être remplie, en utilisation, par ledit fluide de fonctionnement ;
- ledit élément de butée (24) comprend une zone périphérique (26) ayant une forme circulaire, qui entoure extérieurement une portion principale (27) et s'étend radialement à partir de la ladite portion principale (27) jusqu'à l'extérieur, ladite zone périphérique (26) étant interposée entre une portion d'extrémité (15 ; 115) dudit noyau fixe (10) et un épaulement (3a) défini par une paroi interne d'une cavité principale (3 ; 3') comprise dans ladite pluralité de cavités (3, 4 ; 3', 4') ;
- ladite portion principale (27) comprend un évidement (28) qui s'étend parallèle à un axe longitudinal (X) de ladite vanne (1) et fait face à une partie opposée à ladite deuxième chambre (25) ;
**caractérisée en ce que** :
- ledit piston principal (32) est pourvu d'un pivot (33) qui fait saillie d'une extrémité dudit piston principal (32) jusqu'audit élément de butée (24) de manière à être reçu, en utilisation, à l'intérieur dudit évidement (28) ;
- dans ledit élément de butée (24), une conduite supplémentaire (30) est réalisée qui relie ladite deuxième chambre (25) à une troisième chambre (31) et est agencée pour être traversée par ledit fluide de fonctionnement, ladite troisième chambre (31) étant interposée entre ledit élément de butée (24) et ledit piston principal (32).

2. Vanne selon la revendication 1, dans laquelle ledit élément de butée (24) est fixe.

3. Vanne selon la revendication 1 ou 2, dans laquelle lesdits moyens d'obturation (23) sont en forme de doigt et réalisés d'un seul tenant avec ledit noyau mobile (11).

4. Vanne selon la revendication 1 ou 2, dans laquelle un élément d'obturation (123) est relié audit noyau mobile (11) par un élément de liaison (111), ledit élément d'obturation (123) étant pourvu de moyens d'obturation (23') qui sont tronconiques et réalisés d'un seul tenant avec ledit élément d'obturation (123).

5. Vanne selon l'une quelconque des revendications précédentes, dans laquelle ladite conduite supplémentaire (30) s'étend parallèle audit axe longitudinal (X) pour l'épaisseur complète dudit élément de butée (24) .

6. Vanne selon l'une quelconque des revendications 1 à 5, dans laquelle lesdits moyens d'entraînement (5, 8, 22) comprennent un ressort (22) agencé pour maintenir ledit noyau mobile (11) dans une position abaissée ou dans une position levée lorsque lesdits moyens d'entraînement (5) ne sont pas actifs, de manière à maintenir lesdits moyens d'obturation (23 ; 23') en prise avec ou libéré dudit trou (29).

7. Vanne selon l'une quelconque des revendications précédentes, dans laquelle ledit boîtier (2) constitue le corps de ladite vanne (1, 100).

8. Vanne selon l'une quelconque des revendications 1 à 6, dans laquelle ledit boîtier (2') est réalisés en la forme d'un collecteur, agencé pour entourer et enfermer ledit piston principal (32), ledit élément de butée (24) et ladite portion d'extrémité (115) dudit noyau fixe (10).
